# EUROPEAN PATENT APPLICATION

(11) **EP 3 882 598 A1**
(43) Date of publication of application: **22.09.2021**
(21) Application number: 21162802.9
(22) Date of filing: 16.03.2021
(51) Int. Cl.: G01M 3/24

(54) **LEAK DETECTION**

(30) Priority: 16.03.2020 GB 202003793
(71) Applicant: Fido Tech Ltd, Bicester, Oxfordshire OX27 9AU (GB)
(72) Inventor: EDWARDS, Neil, Bicester, Oxfordshire OX27 9AU (GB)
(74) Representative: Creation IP Ltd

(57) **Abstract**

There is provided a system for detecting leaks in pipework, the system including a listening stick having a sound sensor and an external processing unit. Data from the sound sensor is processed to detect audio signatures of leaks: the resulting detection of leaks supplements and augments the skills of human operators.

## Description

### TECHNICAL FIELD

The present disclosure relates to leak detection in general, and to a method and apparatus for detecting leaks in underground pipework, in particular.

### BACKGROUND

Underground pipework carrying a liquid (such as fresh water), a gas (such as natural gas) or a fluid, may develop a leak for a variety of reasons. In many cases, the leak is undesirable, inconvenient or even dangerous and must be located so that the leak may be repaired.

The supply of utilities such as fresh water relies upon the efficient operation and maintenance of the supply network. The supply network for fresh water for a typical city would include many thousands of kilometres of buried pipework. Sections of the pipework may be constructed from a range of materials, with a range of dimensions. Some sections may be considerably older than others: some sections may be in better condition than others. Leaks arise within pipework sections and at joints between pipes either through slow degradation or isolated material failures.

The primary leak detection tool for many water engineers is a "listening stick". Listening sticks are readily deployed by a human operator and allow the engineer to hear the characteristic noises associated with an underground leak in nearby utility pipework.

Listening sticks do however have significant limitations which may lead an engineer to diagnose "no fault found" when in fact a leak is nearby.

One cause of such "false negatives" can be the difficulty in distinguishing between the somewhat variable characteristic noises associated with a nearby leak and noise from other sources. While this can be (and is) somewhat ameliorated by the actions of the water engineers in reducing the level of noise from at least some of the other sources (for instance, by deploying the listening stick during quieter periods, e.g. during the night or at weekends, redirecting traffic and/or by requesting nearby businesses and households to restrict activities that might generate noise).

Such steps do not however account for the unpredictable attenuation and/or distortion of sound caused by inhomogeneities under the ground surface. Voids and subterranean structures (manmade and geological), for example, can damp (or amplify) acoustic frequency waves (at some or all audible frequencies) so that the sound heard by the engineer at the listening stick may be unrecognisable as a leak "signature".

Furthermore, as the distance from a leak is increased higher frequency noise components are attenuated more markedly than those at lower frequencies. The typical human ear becomes less sensitive as the frequency decreases, an effect that is exacerbated as the strength of the signal (measured in decibel, db) drops. As a result, in many scenarios, the engineer will hear nothing even when a signal is present.

It is also known to attempt to detect such sounds by deploying one or more highly sensitive ground microphones. Such microphones may be monitored by human operators to identify and locate leaks. To that end, they emulate the signal response of the human ear, amplifying the audible signal.

Microphones also suffer from issues with background noise. In addition, operating leak detection systems using such specialist microphones requires additional training and expertise, which can dissuade engineers from deploying such systems.

For water engineers, it is a goal to save and preserve as much supply water as possible. It is thus key to improve both the speed and accuracy of the leak detection process. Practicality is also important as any leak detection equipment needs to be easily deployed in a wide range of outdoor and built environment locations.

Engineers working with other fluids have similar goals and share the same desire for improvement.

Reference to any prior art in this specification is not an acknowledgement or suggestion that this prior art forms part of the common general knowledge in any jurisdiction, or globally, or that this prior art could reasonably be expected to be understood, regarded as relevant/or combined with other pieces of prior art by a person skilled in the art.

It is an object of the invention to at least ameliorate one or more of the above or other shortcomings of prior art and/or to provide a useful alternative.

### SUMMARY OF THE INVENTION

The invention is a system and method as defined in the appended claims.

The invention deals with problems encountered by fluid leak location operatives by facilitating monitoring for leak sound sources from a multiplicity of different, spaced-apart ground surface locations, listening either simultaneously or sequentially, and by then suitably combining and processing the received signals using a machine learning algorithm to provide the desired indication of the source's location.

It will be appreciated that features and aspects of the present disclosure may be combined with other different aspects of the disclosure as appropriate, and not just in the specific illustrative combinations described herein.

### BRIEF DESCRIPTION OF DRAWINGS

The present disclosed subject matter will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure and do not limit the scope of the disclosure. In the drawings:
Figure 1 shows a schematic illustration of a listening stick;
Figure 2 illustrates the operation of a listening stick in the detection of leaks in underground pipework;
Figures 3A and 3B show a sensor device suitable for inclusion in an audio sensor stick in accordance with an embodiment of the present disclosure;
Figures 4A to 4C illustrate the insertion of a sensor device such as that in Figures 3A and 3B into a cradle in the head section of an audio sensor stick in accordance with an embodiment of the present disclosure;
Figure 5 illustrates the flow of operations in deploying an audio sensor stick in accordance with an embodiment of the present disclosure;
Figure 6 illustrates the operation of an audio sensor stick in the detection of leaks in underground pipework 9in accordance with an embodiment of the present disclosure; and
Figures 7A and 7B illustrate screenshots of a mobile phone application displaying detection results from an audio sensor stick in accordance with an embodiment of the invention.

### DESCRIPTION OF EXAMPLE EMBODIMENTS

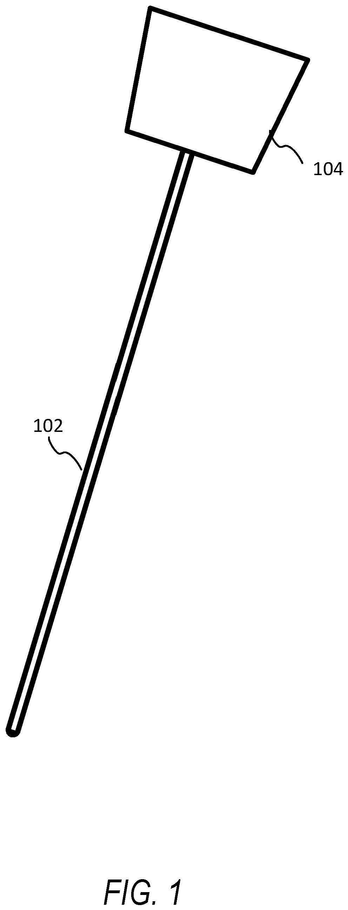

Conventional listening sticks, such as the one illustrated in Figure 1, have a basic construction comprising a rod section 102 (typically between a meter and a meter and a half in length for the convenience of a human operator) and an amplifying head section 104 physically coupled to a proximal end of the rod section (to guide sound waves to the ear of the operator): this construction has remained essentially unchanged for over a century. The rod section may be of solid (or hollow) wood, metal and/or plastic material, typically selected for its facility in transmitting acoustic waves along its length.

In one example, the rod section is 10mm in diameter and made of stainless steel, the amplifying head is a wooden or plastic block attached to the rod section via an M8 thread that the operator presses against their head. The vibrations that are transmitted up the rod are then transferred to the user's skull and it is this vibration that the operator 'hears' through bone conduction. In other examples, head section incorporates an air-filled chamber and the acoustic signal transmitted up the rod section resonates in the chamber so that the operator hears the signal directly.

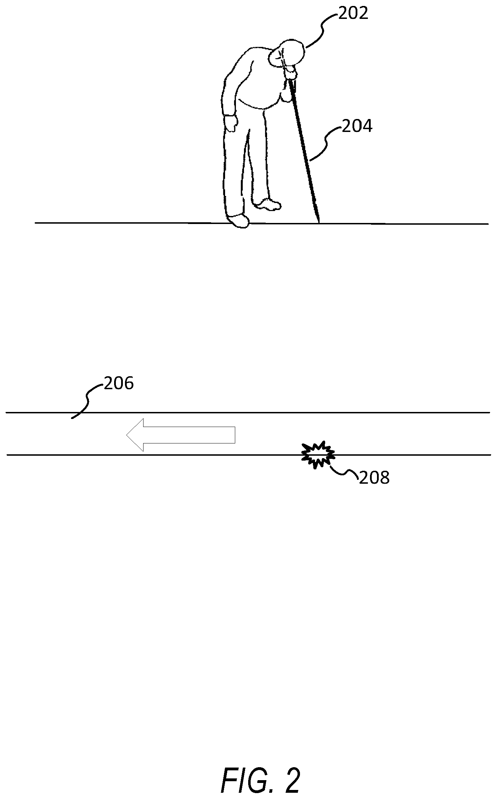

Figure 2 illustrates a listening stick 204 in use. Water distribution pipework 206 is typically buried around 2-3 metres below ground. As a leaking fluid often generates an ongoing noise, such as a hiss, this leak noise can be conducted some distance along the pipework as vibration (in either direction). There is also some sound transmission through the ground in which pipework lies. Listening sticks are attractive because the operator 202 may detect the presence of a leak 208 simply by listening to these sounds at a number of positions on the ground surface and concluding that the leak location is likely to be a point at which the noise is most pronounced.

When using a listening stick 204, a distal tip of the rod section is brought into contact with an exposed point in the inspected pipework (for example, a gate valve, fire hydrant or a water stopcock) or it may (as in Figure 2) be inserted into a suitably dimensioned hole in the ground surface near which such pipework is buried. Either way, the sound of a leak propagating through a buried pipe within the inspected pipework is transmitted as an acoustic signal from the distal tip of the rod section to a proximal end of the rod section and further transmitted to the amplifying head. Therefore, if the operator 202 holds the head of the listening stick to their ear near a sound listening hole in the amplifying head (or against their skull, in the case of a solid head section), the operator can listen to the sound. With a little experience, it is possible for the operator 202 to determine whether or not leakage has occurred in the section of pipework 206 being inspected based on the strength, pitch and/or time-evolution of the vibration sound.

As noted above, conventional listening sticks have significant limitations which may lead an engineer to diagnose "no fault found" when in fact a leak is nearby. Causes of such "false negatives" include the difficulty in distinguishing between characteristic noises associated with a nearby leak and noise from other sources and the attenuation and/or distortion of sound caused by inhomogeneities under the ground surface.

To compensate for deficiencies in human hearing (i.e. the reduction in sensitivity to lower frequencies components of acoustic signals) and in signal processing (i.e. the ability to distinguish leak signal characteristics from noise from other sources), it is proposed to incorporate one or more microelectromechanical systems (MEMS) sensor devices within an audio sensor stick that duplicates and enhances the functionality of the conventional listening stick.

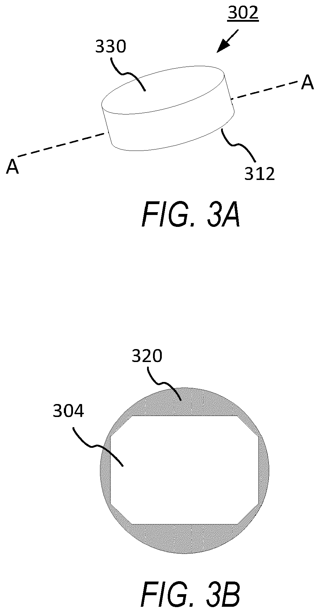

Figure 3A shows a typical view of a sensor device 302, which may conveniently house one or more MEMS devices as discussed above. Figure 3B illustrates a cross-section (along the line A-A) through sensor device 302.

Sensor devices containing MEMS sensors may take many forms including spherical and lozenge shapes according to desired application. In certain embodiments, the MEMS devices are provided in a squat cylindrical (or "puck") shape as illustrated in Figure 3A.

In certain embodiments, the sensor device may be a sealed device with a robust housing 320 formed of two halves encasing the circuitry 304 of the sensor device (the circuitry including a processor, battery, memory means, camera, MEMS sensor devices etc.). The two halves are screwed together to allow straightforward access to the circuitry 304 in cases where wired data transfer is required (e.g. when battery or other components need replaced or the memory means is physical removal to transfer recorded data directly to a reader means). In the absence of the audio sensor stick, the sealed sensor device may also be suitable for insertion in flowing fluid within the pipework itself.

The MEMS sensor devices used are selected for their ability to detect vibrations down to 0.5Hz, for instance (well below the effective range of human hearing). Output measurement data may be recorded (i.e. stored) and transferred for further processing at an external processing unit. Transferring the data may be at least one of transmitting the data as a wireless signal; transmitting the data over a wired connection, such as a USB interface; or physical removal of a storage medium upon which the data is stored. The recorded signal is then processed at the external processing unit to detect audio signatures of a leak (by applying measured acoustic samples to a machine learnt database of samples classified as leak signatures). Consequently, the engineer may conduct a familiar task, surveying an area around a suspected leak using a familiar tool, a listening stick, while enabling a far more informative, artificial intelligence, test for the presence of a leak.

The processing of the recorded data may include applying a machine learning algorithm trained with the profiles of audio signals associated with known leaks (stored in a suitable database). Naturally, once a leak is correctly detected through such processing, newly detected leak signals are used to update parameters of the machine learning algorithm so that subsequent applications of the algorithm identify the presence of leak signatures in recorded data more swiftly and/or with greater confidence.

The application of the machine learning algorithm provides not only an indication of the presence of a leak but also a predicted size of the leak.

As it is contemplated that a plurality of audio sensor sticks in accordance with the present disclosure will be deployed by many different operators in many different scenarios and under a range of environmental and operational conditions, the data gathered from respective deployed audio sensor sticks may be used to further update parameters of the machine learning algorithm thereby improving the ability to detect leaks and predict leak size beyond the capability of a single operator or a single audio sensor stick over a life-time of use.

This leak detection system significantly improves the signal detection threshold while practically eliminating the background interference, making the leak noise detection much more accurate.

In other arrangements, by fixing the detection device to a holder (e.g. a physical clamp or magnetic holder) rather than a listening stick, the device can be attached to any metal pipe fitting without a human operator and can be left to perform overnight recordings for machine learning analysis the following day.

In accordance with certain embodiments, a head section of a listening stick is provided with one or more sensor devices. In certain embodiments, the head section of a convention listening stick is replaced by a cradle means for removably receiving a sensor device. In each case, the or each sensor device includes at least one acoustic MEMS sensor.

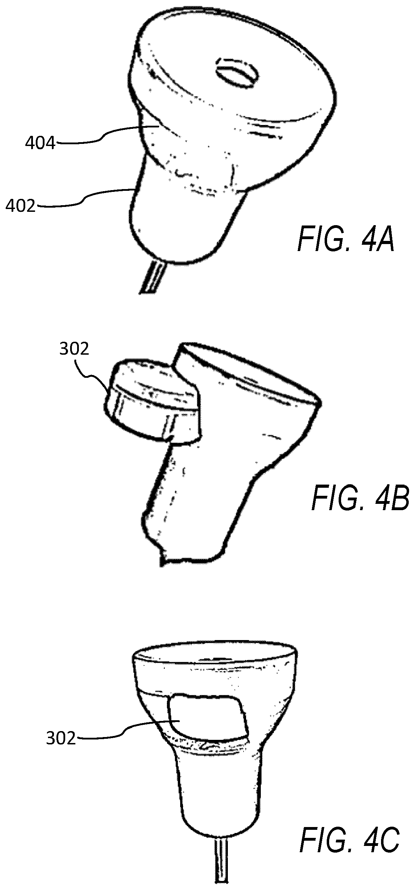

Figures 4A to 4C illustrate the insertion of a suitable sensor device (such as the sensor device illustrated in Figure 3A) into a head section 402 of an audio stick. The head section 402 incorporating the or each sensor devices conducts sound in exactly the same way as the conventional head section so that the audio sensor stick in accordance with the present disclosure may simultaneously be used in the familiar "listening stick" mode which some operators may prefer.

In Figure 4B, a sensor device 302 is partially inserted in cradle means 404 in the head section 402 by sliding the sensor device 302 from the side (i.e. parallel to the proximal surface of the head section against which the operator places their ear/skull) thereby ensuring a tight fitting at the top and the bottom surfaces of the sensor device. This is to make sure that all the vibration is transmitted effectively from the distal portion of the head section to the sensor device.

Figure 4C illustrates the head section 402 incorporating the sensor device 302 and thus ready for deployment.

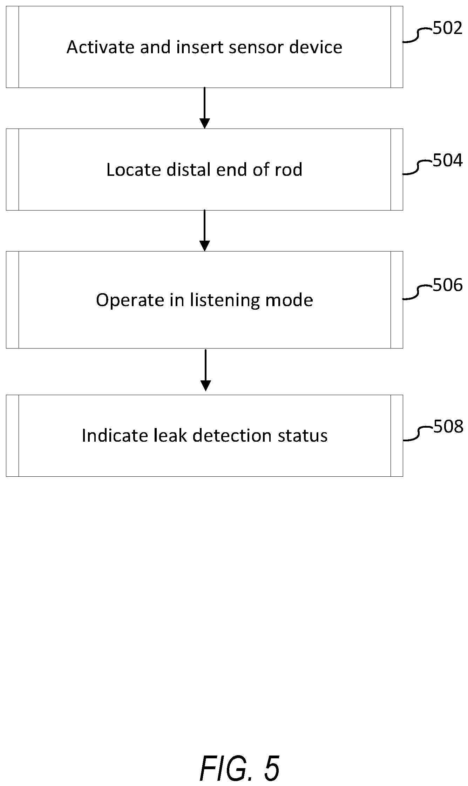

Figure 5 illustrates an exemplary sequence of operations in deploying an audio sensor stick in accordance with the present disclosure.

At operation 502, the sensor device 302 is activated, for example it may be shaken, in an "up and down gesture". Conveniently an indicator is provided (e.g. a green light emitting diode, LED indicator) in the sensor device and the indicator is addressed to show human operators that the sensor device is 'live'. Either before or after activation the sensor device may be inserted sideways into a cradle recess in the head section, thereby physically coupling to a rod section conducting vibrations from a distal end.

At operation 504, the distal end of the rod section is then placed onto a test point (e.g. an exposed point on pipework or in a hole in the ground surface provided to receive the distal end) and held still either in the hands of a human operator or in a mechanical support structure, for example.

At operation 506, the sensor device operates in a listening mode, recording a measurement signal corresponding the detected vibrations conducted by the rod section.

In certain embodiments, the sensor device is provided with a communication module including a wireless transceiver. In the listening mode, the sensor device transmits information corresponding to the measurement signal via the transceiver to an external processing unit, where the transmitted information is processed by a machine learning algorithm and an output indicator signal is generated. The sensor device further operates to receive the output indicator signal. Conveniently, a detection indicator is provided in the sensor device. Here, if the output indicator signal indicates that a noise of some type is present the detection indicator may show a blue light: the absence of light may means there is no detectable signal. In certain cases, after the detection indicator continuously presents the blue light for longer than a predetermined threshold period, the activation indicator (i.e. the green light) may turn red indicating that a leak noise has been detected.

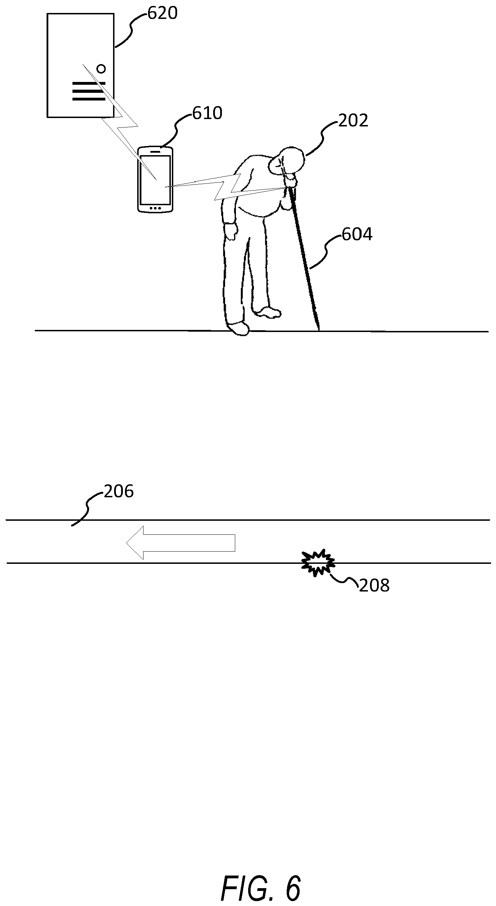

Figure 6 illustrates an audio sensor stick 604 in accordance with the present disclosure in use. As in Figure 2, water distribution pipework 206 is shown buried below ground and there is a leak 208 present.

The sensor device in the audio sensor stick 604 is arranged to communicate with an external processing unit 620 indirectly via a mobile terminal 610 (such as a mobile telephone). The mobile terminal 610 may be arranged to execute a monitoring application. The monitoring application may process the information transmitted by the sensor device and to display that information.

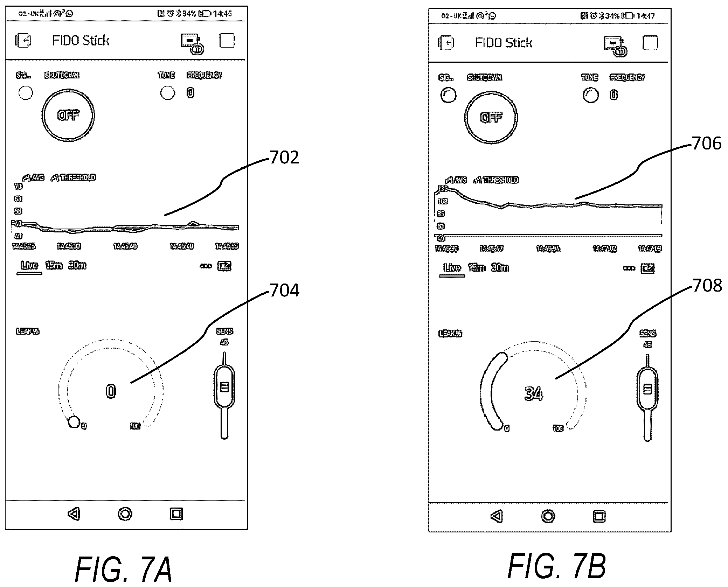

At operation 508, using an associated mobile phone application, the data regarding the detection can be displayed as seen in Figures 7A and 7B.

Figure 7A shows an example of a screen generated by a mobile phone application for a mobile terminal where no leak is detected: Figure 7B shows a similar screen where a leak is indicated.

The mobile terminal 610 receives information corresponding to the measurement signal from the sensor device 604 (which may be the waveform recorded by the sensor) and relays that information to the external processing unit 620.

The external processing unit 620 executes a web service that interfaces with the mobile phone application. Information relayed from the sensor device 604 (including the measurement signal) is then passed by the web service to a machine learning service that classifies the signal. The exchange of information may be in real time. The machine learning service is trained on a dataset of audio files from various validated sources (i.e. recorded signals from confirmed leak events). The machine learning service is arrange to recognise and classify the signal either as a leak, as one of a number of other alternate environmental signals (such as electrical noise, rail/road traffic, generators and rain water) or as anomalous noises (such as those caused by sensor failures).

The machine learning service outputs a detection result (for example as a percentage degree of confidence in the identification of a leak) and this detection result is sent in a report message to the mobile terminal 610 for display by the mobile phone application. Again, the transfer of detection results may be in real time so that the audio sensor stick's user can view instantaneous results utilising a broad spectrum of acoustic frequencies rather than waiting for a report to be generated elsewhere, allowing for live detection and better results when searching for leaks.

In the upper half of the screenshot in Figure 7A, the time-evolved average signal strength waveform 702 received from a sensor device in a listening stick is shown to be close to a predetermined threshold level. The detection result is displayed in the lower half of the screenshot - here, as no leak is indicated the confidence level 704 is shown as 0%.

By contrast, in the upper half of the screenshot in Figure 7B, the time-evolved average signal strength waveform 706 received from the sensor device in a listening stick is shown to lie considerably above the predetermined threshold level. The detection result displayed in the lower half of the screenshot indicates the presence of a possible leak with a confidence level 708 of 34%.

The detailed description set forth below in connection with the appended drawings is intended as a description of various exemplary embodiments of the disclosure and is not intended to represent the only forms in which the present disclosure may be practised. It is to be understood that the same or equivalent functions may be accomplished by different embodiments that are intended to be encompassed within the scope of the invention. Furthermore, terms such as "comprises", "comprising", "has", "contains" or any other grammatical variation thereof, are intended to cover a non-exclusive inclusion, such that module, circuit, device components, structures and method steps that comprises a list of elements or steps does not include only those elements but may include other elements or steps not expressly listed or inherent to such module, circuit, device components or steps. An element or step proceeded by "comprises ... a" does not, without more constraints, preclude the existence of additional identical elements or steps that comprise the element or step.

The description of the various embodiments of the present disclosure has been presented for purposes of illustration and example, but is not intended to be exhaustive or to limit the invention to the forms disclosed. It will be appreciated by those skilled in the art that changes could be made to the embodiments described above without departing from the broad inventive concept thereof.

Further particular and preferred aspects of the present invention are set out in the accompanying independent and dependent claims. It will be appreciated that features of the dependent claims may be combined with features of the independent claims in combinations other than those explicitly set out in the claims.

## Claims

1. A system for detecting leaks in pipework, the system comprising:
an audio sensor stick comprising:
a rod section for conducting vibrations from a distal tip to a proximal end; and
a head section physically coupled to the proximal end of the rod section, the head section including at least one acoustic sensor, the acoustic sensor converting the conducted vibrations into a measurement signal; and
a processing unit for receiving the measurement signal, the processing unit applying a machine learning algorithm trained with leak signature data, the machine learning algorithm classifying the measurement signal and generating a detection result.

2. The system of Claim 1, wherein the acoustic sensor is arranged to measure infrasonic acoustic frequencies.

3. The system of Claim 2, wherein the infrasonic acoustic frequencies are in the range 0.5Hz to 20Hz.

4. The system of any one of claims 1 to 3, wherein the acoustic sensor is a microelectromechanical system, MEMS, device.

5. The system of any one of claims 1 to 4, wherein the system further comprises a mobile terminal, and wherein the measurement signal is transmitted wirelessly from the head section to the mobile terminal and then transmitted from there to the processing unit for processing.
